# EUROPÄISCHE PATENTSCHRIFT

(11) **EP 0 497 007 B1**
(45) Veröffentlichungstag und Bekanntmachung des Hinweises auf die Patenterteilung: **23.11.1994**
(21) Anmeldenummer: 91122341.0
(22) Anmeldetag: 28.12.1991
(51) Int. Cl.: B60N 2/22, B60N 2/44, F16D 43/02, F16D 41/10

(54) **Getriebe für die Übertragung einer Drehbewegung in beiden Drehsinnen**
Transmission for transmitting rotational motion in both directions of rotation
Transmission pour le transfert d'un mouvement rotatif dans les deux sens de rotation

(30) Priorität: 01.02.1991 DE 9101110 U
(43) Veröffentlichungstag der Anmeldung: 05.08.1992
(73) Patentinhaber: Schwarzbich, Jörg, D-33615 Bielefeld (DE)
(72) Erfinder: Schwarzbich, Jörg, D-33615 Bielefeld (DE)
(74) Vertreter: Meldau, Gustav, Dipl.-Ing.

(56) Entgegenhaltungen:
- EP-A- 0 071 501
- EP-A- 0 370 502
- DE-B- 1 111 476
- FR-A- 2 146 707
- FR-A- 2 350 982
- GB-A- 401 746
- US-A- 2 191 763

## Beschreibung

Die Erfindung bezieht sich auf ein Getriebe für die Übertragung einer Drehbewegung in beiden Drehsinnen, wobei das Getriebe mit Freilauf und Hemmung derart versehen ist, daß bei Kraftfluß vom Antrieb zum Abtrieb das Getriebe in beiden Drehsinnen frei drehbar ist und bei Umkehrung des Kraftflusses sperrt, insbesondere Getriebe für die Sitzverstellung von Kraftfahrzeugen mit in beiden Drehrichtungen wirkender Freilaufbremse bestehend aus je einem Paar von Klemmkörpern, die von federnd elastischen Elementen in ihre Sperrstellung an Keilflächen gedrückt werden und bei Verdrehung des Antriebsrades von mit diesen verbundenen Klauen aus ihrer Sperrstellung gedrückt werden, wobei vorzugsweise das Abtriebsrad exzentrisch mit einer Innenverzahnung an den zu verstellenden Teil mit hoher Übersetzung kämmt und Antriebs- sowie Abtriebsrad auf einer gemeinsamen Nabe gelagert sind bzw. sitzen.

Es sind beispielsweise Verstellgetriebe für Kraftfahrzeugsitze bekannt, mit einer Bremse, ferner mit einem Handrad zur Verstellung des Verstellgetriebes, wobei mit dem Handrad ein Bremsenteil fest verbunden ist, das in einer Mittelstellung das Verstellgetriebe fixiert und in zwei gegensätzlich verschwenkten Lagen das Verstellgetriebe für ein freies Drehen mittels des Handrades freigibt, bei denen das Bremsenteil aus zwei gleichachsig gelagerten Bremsenbereichen besteht, die um vorgegebene Schwenkwinkel gegeneinander verschwenkbar sind, wobei der eine Bereich zwei Federelemente enthält, die zwei Rollkörper in die Sperrlage zwischen Klemmflächen des Bremsenbereichs und die gegenüberliegende kreiszylindrische Fläche des Gehäuses drücken, und wobei der zweite Bremsenbereich in Mittelstellung in geringem Abstand von den Rollkörpern liegende Druckflächen aufweist, die bei Verdrehung in jede der beiden Richtungen jeweils einen Klemmkörper aus der Klemmlage lösen (EP-A-0 370 502).

Bei derartigen bekannten Verstellgetrieben, für die das vorgenannte nur ein Beispiel ist, ist die Lagerung des Handrades an einem der beiden gegeneinander zu verstellenden Teile (beispielsweise dem Sitzrahmen) angeordnet, während der Abtrieb mit dem anderen der beiden zu verstellenden Teile (beispielsweise dem Sitzlehnenrahmen) fest verbunden ist. Dabei ist es jedoch erforderlich noch eine weitere feste Verbindung beipielsweise zu der der schalenförmigen Getriebeabdeckung und -Lagerung an dem Sitzrahmen gegenüberliegenden schalenförmigen Getriebeabdeckung und ggfs. -Lagerung vorzunehmen, die außerhalb des Getriebes an mehreren Punkten vorzunehmen ist.

Die Erfindung hat sich die Aufgabe gestellt, ein Getriebe der gattungsgemäßen Art derart auszubilden, daß es bei wesentlich geringerem Raumaufwand beim Einbau - gegenüber bisher bekannten vergleichbaren Getrieben - aus einer geringeren Anzahl von Teilen besteht und daher mit geringerem Aufwand herzustellen ist und auch insbesondere für den Einbau einen geringeren Platzbedarf hat.

Zur Lösung dieser Aufgabe ist ein Getriebe der gattungsgemäßen Art (siehe z.B. die o.g. EP-A-0 370 502) dadurch gekennzeichnet, daß die Klemmkörper des Freilaufs auf der gestellfesten Nabe gleiten, und daß Schrägflächen zum Klemmen der Klemmkörper des Freilaufs auf der Innenfläche eines, die Nabe umgebenden Ringes ausgebildet sind, der mit dem umgebenden Abtriebsrad fest verbunden und mit Vorsprüngen versehen ist, die in Ausnehmungen an den Klauen des Antriebsrades zum Verschieben der Klemmkörper aus ihrer Klemmstellung eingreifen.

Aufgrund der Anordnung der Schrägflächen zum Klemmen der Klemmkörper des Freilaufs auf der Innenfläche eines, die Nabe umgebenden Ringes, also an der äußeren Peripherie der Freilauf-Ausbildung ergibt sich die Möglichkeit zu einer besonders kompakten Ausbildung des gesamten Getriebes und insbesondere auch die Möglichkeit, die Nabe gestellfest auszubilden bzw. im Gestell fest zu verankern - das heißt jedoch mit anderen Worten, daß die Nabe auch beispielsweise als einzige Verbindung zwischen den das Getriebe abdeckenden Schalen des Gehäuses liegen kann, wobei selbstverständlich die Möglichkeit gegeben ist, die Nabe zusätzlich als Lagerung für ein gegenüber dem Gestell verschwenkbares Teil zu benutzen und insbesondere die Möglichkeit gegeben ist, die Nabe auch als gestellfeste Hülse auszubilden, wobei durch diese Hülse eine Antriebswelle für ein anderes Getriebe oder dergl. geführt werden kann. Durch die kompaktere Bauart des gesamten Getriebes sind auch die Einzelteile des Getriebes kleiner, es hat eine geringere Masse und es sind insgesamt wesentlich geringere Oberflächen zu härten, das heißt mit anderen Worten, daß sich dadurch erheblich Vorteile für die Fertigung und den Einbau ergeben. Der die Nabe umgebende Ring, auf dessen Innenfläche die Schrägflächen für die Klemmkörper des Freilaufes ausgebildet sind, kann formschlüssig in ein Zahnrad eingesetzt sein; er kann auch als Zahnrad ausgebildet sein.

Der die Nabe umgebende Ring kann vorteilhaft als Rand eines kopfförmigen Teiles ausgebildet sein, dessen Boden zentrisch gelocht ist zum Durchtritt der Nabe oder einer darin geführten Achse, mit der der Boden ggfs. mittels einer angeformten Muffe fest verbunden ist, wobei das Abtriebsrad auf der Muffe oder dem Topfboden angeordnet ist.

Diese Ausführungsform gibt den Vorteil, daß auch noch an anderen Stellen des Getriebes Lager- und Abtriebsmöglichkeiten vorhanden sind bei beibehaltenem kompakten Aufbau.

Nach einer vorteilhaften Weiterbildung können die federnd elastischen Elemente zwischen den Klemmkörpern des Freilaufs von in diese vorzugsweise mittig eingreifenden Ansätzen an dem Antriebsrad gehalten sein.

Dadurch kann sich für bestimmte Ausführungsformen eine Verbesserung der Funktion ergeben.

Nach einer anderen Ausführungsform können die federnd elastischen Elemente an das Antriebsrad angeformt sein. Diese Bauart ergibt bei kompakter Ausführungsform eine Erleichterung der Montage.

Die Erfindung wird nachstehend anhand von Ausführungsbeispielen mit Bezug auf die Zeichnungen näher erläutert. In den Figuren zeigen
- Figur 1:: Einen radialen Schnitt durch ein Getriebe nach einer ersten Ausführungsform.
- Figur 2:: Einen Längsausschnitt entlang der Linie II/II der Figur 1.
- Figur 3:: Einen radialen Schnitt durch ein Getriebe nach einer zweiten Ausführungsform.
- Figur 4:: Einen Querschnitt entlang der Linie IV/IV der Figur 3.
- Figur 5:: Einen radialen Querschnitt durch ein Getriebe nach einer dritten Ausführungsform.
- Figur 6:: Einen Querschnitt entlang der Linie VI/VI der Figur 5.

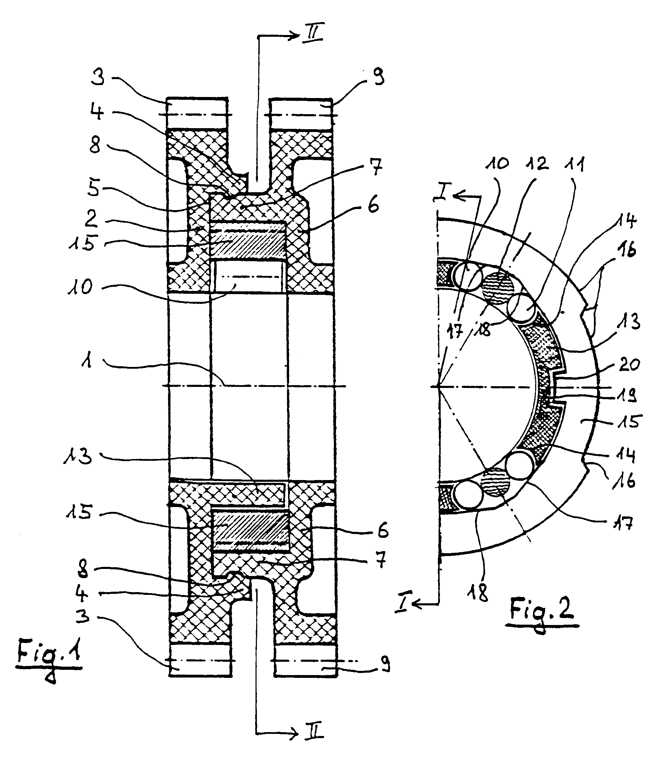

Nach dem ersten Ausführungsbeispiel entsprechend den Figuren 1 und 2 ist auf einer gestellfesten Nabe deren Mittelachse durch die gestrichelte Linie 1 angedeutet ist und die als durchgehende massive Achse ausgebildet sein kann, das Antriebsrad 2 drehbar gelagert. Das Antriebsrad 2 kann unmittelbar mit einem Betätigungshandgriff versehen sein, es kann jedoch auch über seine Außenverzahnung 3 und ein damit kämmendes Zwischengetriebe mit dem Drehhandgriff oder auch mit einem motorischen Antrieb verbunden sein.

An dem Antriebsrad 2 ist, abgesetzt nach innen von seiner äußeren Begrenzung, ein konzentrischer, ringförmiger Vorsprung 4 ausgebildet, an dem zur Drehachse hin eine Einnehmung 5 anschließt. Diese Einnehmung 5 die als ein in Radiusrichtung breiter Ringraum ausgebildet ist, dient zur Aufnahme der in beiden Drehrichtungen wirkenden Freilaufbremse und zur Aufnahme des Verbindungsflansches des Abtriebrades 6. Das Abtriebrad 6 ist in gleicher Weise, wie das Antriebsrad auf der die gestrichtelte Linie 1 angedeuteten Nabe drehbar gelagert und greift mit seinem vorstehenden Ringflansch 7 unter den Vorsprung 4 des Antriebsrades 2, so daß es diesem gegenüber drehbar geführt ist. Zur Verbindung der beiden Räder gegen axiale Verschiebung dient eine, an der Nabenseite des Vorsprunges 4 angeordnete Anformung 8, der eine Einformung auf der der Nabe entgegengesetzten Seite des Ringflansches 7 des Abtriebrades 6 entspricht, wobei diese beiden An- und Einformungen etwas elastisch ineinandergreifen bzw. beim Gegeneinanderdrücken der beiden Räder 2 und 6 ineinanderschnappen.

Auch das Abtriebsrad 6 ist auf seinem Umfang mit einer Zahnung 9 versehen, die in ein weiteres Getrieberad eingreift und zwar zweckmäßig, um eine hohe Drehzahlübersetzung zu erreichen in ein auf seiner Innenseite verzahntes und das Abtriebsrad umgebendes Zahnrad, das gegenüber dem Abtriebsrad 6 exzentrisch angeordnet ist.

Die zur Drehachse hin liegende Fläche des Flansches 7 an dem Abtriebsrad 6 bildet mit der zum Antriebsrad gerichteten Frontfläche innerhalb dieses Flansches, sowie mit der gegenüberliegenden Frontfläche des Antriebsrades, einen Ringraum der die Nabe umgibt. In diesem Ringraum ist der die beiden Räder 2 und 6 miteinander kraftflüssig verbindende in zwei Richtungen wirkende Freilauf angeordnet und zwar sind in gleichen Abständen voneinander auf den Umfang verteilt, jeweils Paare von Klemmkörpern 10 und 11 unmittelbar auf der zylindrischen Fläche der Nabe laufend angeordnet zwischen denen jeweils ein federnd elastisches Element 12 liegt, das derart ausgebildet ist, daß das Bestreben hat, die beiden Klemmkörper 10 und 11 auseinander zu drücken. Zwischen diesen Paaren von Klemmkörpern 10 und 11, die als zylindrische Walzen ausgebildet sein können, ist der Ringraum von Klauen 13 ausgefüllt, die an das Antriebsrad 2 angeformt sind. Diese Klauen 13 liegen mit zweckmäßig ausgekehlten Stirnflächen 14, angepaßt an die Rundung der Klemmkörper 10 und 11 unter Freilassung eines geringen Abstandes, gegen diese.

Innerhalb des Flansches 7 an dem Abtriebsrad 6 ist ein Ring 15 angeordnet, der mit einer Außenzahnung 16 in eine gleichgeformte Zahnung auf der Innenfläche des Flansches 7 eingreift und damit formschlüssig fest mit dem Abtriebsrad 6 verbunden ist. An der Innenfläche des Ringes 15 sind, dem Bereich der Klemmkörper 10 und 11 zugeordnet, Schrägflächen 17 und 18 ausgebildet. Der Abstand der kreisförmigen Innenbegrenzung des Ringes 15 von der Außenfläche der Nabe ist geringer als der Durchmesser der Klemmkörper 10 und 11, während die den Klemmkörpern zugeordneten Schrägflächen 17 und 18 derart ausgebildet sind, daß sie an ihrem Schnittpunkt bzw. der Fläche die anstelle ihres Schnittpunktes liegt, einen größeren Abstand von der Außenfläche der Nabe haben, als dem Durchmesser der Klemmkörper 10 und 11 entspricht.

Die Anordnung ist so ausgeführt, daß die federnd elastischen Elemente 12 zwischen dem jeweils ein Paar bildenden Klemmkörpern 10 und 11 diese voneinander wegdrücken in dem sich verengenden Zwischenraum zwischen den Schrägflächen 17 und 18 einerseits und der Außenfläche der Nabe andererseits, die Klemmkörper 10 und 11 demnach also in Sperrstellung drücken, in der das Abtriebsrad gegenüber einer Verdrehung zur Nabe in beiden Richtungen blockiert ist.

Bei einer Drehung des Handrades und dabei Drehung des Antriebsrades 2 werden, gleichgültig in welcher Richtung die Drehung erfolgt, zunächst die ein Mitdrehen des Abtriebsrades in gleicher Richtung sperrenden Klemmkörper 10 oder 11 durch die Stirnflächen 14 der an das Antriebsrad angeformten Klauen 13 aus ihrer Sperrstellung gedrückt. Damit das Abtriebsrad sich daraufhin dann gleichförmig mit dem Antriebsrad dreht sind an den Klauen 13 Ausnehmungen 19 vorgesehen in die Vorsprünge 20 an dem Ring 15 eingreifen. Zwischen den Stirnflächen der Vorsprünge 20 und der Ausnehmungen 19 ist ein geringer Abstand vorgesehen, der ein Verschieben der Klauen 13 gegenüber dem Ring 15 bei Einleitung der Drehbewegung erlaubt und damit sicherstellt, daß der jeweilige Klemmkörper 10 oder 11 aus seiner Klemmstellung gedrückt wird.

Selbstverständlich kann das Abtriebsrad 6 auch derart ausgebildet sein, daß es innerhalb des Ringflansches 7 anstatt des formschlüssig eingesetzten Ringes 15, dessen Formausbildung mit Schrägflächen 17 und 18 sowie mit Vorsprüngen 20 aufweist. Der eingesetzte Ring 15 dient lediglich der einfacheren Herstellung und Montage.

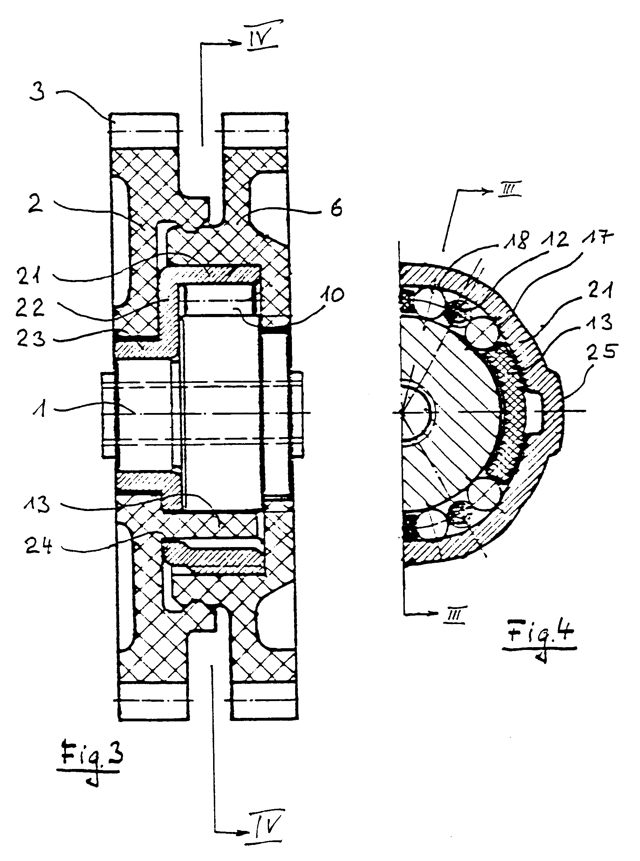

Bei dem zweiten Ausführungsbeispiel nach den Figuren 3 und 4 sind gleiche Teile mit gleichen Bezugszeichen versehen, es ist daher lediglich nachstehend die abweichende Ausführungsform zu beschreiben: Anstelle des Ringes 15 ist bei diesem Ausführungsbeispiel ein aus Blech tiefgezogener Topf 21 in das Abtriebsrad 6 eingesetzt. Dieser Topf 21 hat an seinem Boden 22 eine zentrische Ausnehmung mit einem nach außen gerichteten Flansch 23 der einerseits auf der gestellfesten Nabe 1 drehbar gelagert ist und andererseits auf seiner Außenfläche die Drehlagerung für das Antriebsrad 2 bildet, während die Außenfläche des Bodens 22 als Anlage für die entsprechende Innenfläche des Antriebsrades 2 dient.

Der Topf ist an den Außenbereichen seines Bodens mit Durchlässen 24 für die an das Antriebsrad angeformten Klauen 13 versehen, wobei diese Durchlässe 24 in ihrer Weite etwas größer sind als die Weite der Klauen 13, so daß dadurch die Verschiebemöglichkeit zwischen den Stirnflächen der Vorsprünge 20 an dem Ring 15 und den Stirnflächen der Ausnehmungen 19 an den Klauen 13 nach dem ersten Ausführungsbeispiel übernommen ist, um bei entsprechender Verdrehung ein Verschieben des jeweiligen Klemmkörpers 10 oder 11 aus seiner Klemmstellung in Drehrichtung zu bewirken. Da der Topf aus Blech präzise gepreßt ist, kann er einerseits auf der Innenfläche seines zylindrischen Bereichs 21 mit den Schrägflächen 17 und 18 zum Klemmen der Klemmkörper versehen sein und andererseits auch mit nach außen gerichteten Verformungen 25 versehen sein, die formschlüssig in entsprechende Einformungen an der Innenseite des Flansches 7 des Abtriebsrades 6 angeordnet sind.

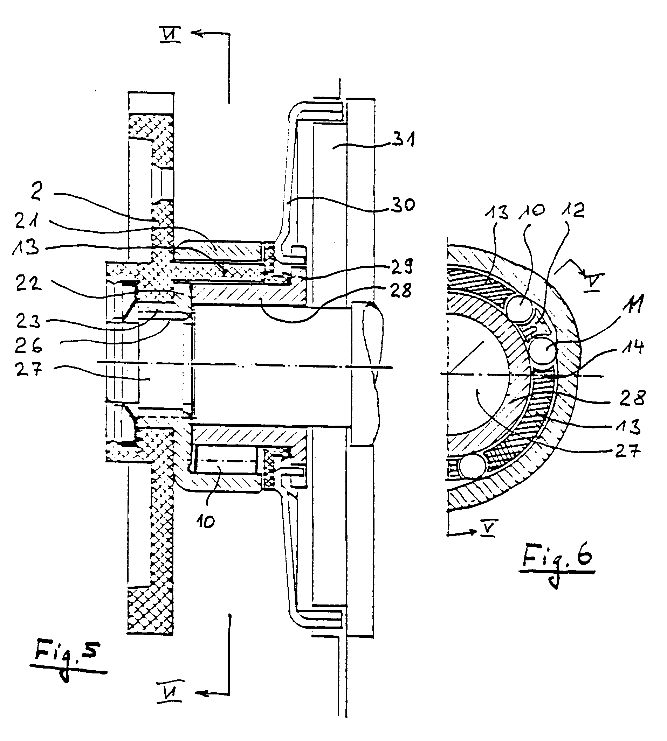

Bei dem dritten Ausführungsbeispiel entsprechend den Figuren 5 und 6 sind ebenfalls wieder gleiche Teile mit gleichen Bezugszeichen versehen. Danach ist die zweite Ausführungsform nach den Figuren 3 und 4 wie folgt weiter gebildet: Der Topf 21 ist nicht in das Abtriebsrad 6 eingesetzt, sondern an seinem nach außen stehenden Bodenflansch 23 mittels einer Verzahnung 26 formschlüssig mit dem Ansatz einer zentral gelagerten drehbaren Innenwelle 27 verbunden. Die Nabe wird gebildet durch eine Hülse 28 in der die Innenwelle 27 drehbar gelagert ist und die ihrerseits mit abstehenden Außenflanschen 29 beispielsweise über Befestigungsklammern 30 fest mit dem Gestell 31 verbunden ist. Zwischen der Außenfläche der gestellfesten Hülse 28 und den an dem Topf 21 ausgebildeten Schrägflächen 17 und 18 sind die Wälzkörper 10 und 11 gelagert.

## Patentansprüche

1. Getriebe für die Übertragung einer Drehbewegung in beiden Drehsinnen, wobei das Getriebe mit Freilauf und Hemmung derart versehen ist, daß bei Kraftfluß von Antrieb zum Abtrieb das Getriebe in beiden Drehsinnen frei drehbar ist und bei Umkehrung des Kraftflußes sperrt, insbesondere Getriebe für die Sitzverstellung in Kraftfahrzeugen mit in beiden Drehrichtungen wirkender Freilaufbremse bestehend aus je einem Paar von Klemmkörpern (10, 11), die von federnd elastischen Elementen in ihre Sperrstellung an Keilflächen gedrückt werden und bei Verdrehung des Antriebsrades (2) von mit diesen verbundenen Klauen (13) aus ihrer Sperrstellung gedrückt werden, wobei vorzugsweise das Abtriebsrad (6) exzentrisch mit einer Innenverzahnung an dem zu verstellenden Teil mit hoher Übersetzung kämmt und Antriebs- sowie Abtriebsrad auf einer gemeinsamen Nabe (1 o. 27) gelagert sind bzw. sitzen, **dadurch gekennzeichnet**, daß die Klemmkörper (10, 11) des Freilaufs auf der gestellfesten Nabe (1) gleiten, und daß Schrägflächen (17, 18) zum Klemmen der Klemmkörper (10, 11) des Freilaufs auf der Innenfläche eines, die Nabe (1 o. 27) umgebenden Ringes (15) ausgebildet sind, der mit dem umgebenden Abtriebsrad (6) fest verbunden und mit Vorsprüngen (20) versehen ist, die in Ausnehmungen (19) an den Klauen (13) des Antriebsrades (2) zum Verschieben der Klemmkörper (10, 11) aus ihrer Klemmstellung eingreifen.

2. Getriebe nach Anspruch 1, **dadurch gekennzeichnet**, daß die gestellfeste Nabe (1) als Hülse (28) ausgebildet ist.

3. Getriebe nach Anspruch 1 oder 2, **dadurch gekennzeichnet**, daß der die Nabe (1 o. 28) umgebende Ring (13) als Rand (21) eines topfförmigen Teils ausgebildet ist, dessen Boden (22) zentrisch gelocht ist zum Durchtritt der Nabe (1) oder einer darin geführten Achse, mit der der Boden (22) ggfs. mittels eines angeformten Flansches (23) fest verbunden ist, wobei das Abtriebsrad (6) auf dem Flansch (23) oder dem Topfrand (21) angeordnet sein kann.

4. Getriebe nach einem der vorstehenden Ansprüche, **dadurch gekennzeichnet**, daß die federelastischen Elemente (12) von in diese vorzugsweise mittig eingreifenden Ansätzen an dem Antriebsrad (2) gehalten sind.

5. Getriebe nach einem der vorstehenden Ansprüche, **dadurch gekennzeichnet**, daß die federelastischen Elemente (12) an das Antriebsrad (2) angeformt sind.

6. Getriebe nach einem der vorstehenden Ansprüche, **dadurch gekennzeichnet**, daß das Antriebsrad (2) und/oder das Abtriebsrad (6) aus Kunststoff bestehen.

## Claims

1. A gearing assembly for the transmission of a rotational movement in both directions of rotation, said gearing assembly being provided with free-running and blocking means in such a manner that during the power flux from the driving side to the driven side the gearing assembly is freely rotatable in both directions of rotation and blocks when the power flux is reversed, in particular a gearing assembly for seat adjustment in motor vehicles, having a free-running brake acting in both directions of rotation and consisting of one pair of clamping bodies (10, 11) each which are urged into their blocking position on wedge surfaces by spring-elastic elements and are urged out of their locking position during rotation of the driving wheel (2) by pawls (13) connected therewith, preferably the internal toothing of the driven wheel (6) eccentrically intermeshing with the adjustable part at a high transmission ratio, and the driving wheel and the driven wheel being mounted or seated on a common hub (1 or 27), characterized in that the clamping bodies (10, 11) of the free-running means slide on the frame-mounted hub (1) and that the slanted surfaces (17, 18) are designed to clamp the clamping bodies (10, 11) of the free-running means on the internal surface of a ring (15) surrounding the hub (1 or 27), which is fixedly connected with the surrounding driven wheel (6) and is provided with projections (20) engaging with recesses (19) on the pawls (13) of the driving wheel (2) for displacing the clamping bodies (10, 11) from the clamping position.

2. Gearing assembly as claimed in Claim 1, characterized in that the frame-mounted hub (1) is formed as a sleeve (28).

3. Gearing assembly as claimed in Claim 1 or 2, characterized in that the ring (13) surrounding the hub (1 or 28) is formed as a rim (21) of a pot-shaped component, the base (22) of which is provided in its centre with a hole for receiving the hub (1) or an axle guided therein, which may be adapted to be fixedly connected with the base (22) by means of an integral flange (23), the driven wheel (6) being adapted to be disposed either on the flange (23) or on the pot rim (21).

4. Gearing assembly as claimed in any one of the preceding claims, characterized in that the spring-elastic elements (12) are retained by shoulders on the driving wheel (2), which are preferably centrally engaged therewith.

5. Gearing assembly as claimed in any one of the preceding claims, characterized in that the spring-elastic elements (12) are integrally formed with the driving wheel (2).

6. Gearing assembly as claimed in any one of the preceding claims, characterized in that the driving wheel (2) and/or the driven wheel are made of plastics.

## Revendications

1. Mécanisme pour la transmission d'un mouvement en rotation dans les deux sens de rotation, le mécanisme étant muni d'une roue libre et d'un dispositif d'arrêt de manière que dans le cas d'un flux de force entre l'élément d'entraînement et l'élément entraîné, le mécanisme puisse tourner librement dans les deux sens de rotation et s'arrêter dans le cas de l'inversion du flux de force, notamment mécanisme pour le réglage de sièges dans des véhicules automobiles comprenant des freins à roue libre fonctionnant dans les deux sens et constitués chacun par une paire de corps de serrage (10, 11), qui sont pressés élastiquement dans leur position d'arrêt contre des surfaces en coin par des éléments à ressort élastiques, et qui sont poussés par rotation de la roue d'entraînement (2) par des mors (13) qui lui sont reliés pour les dégager de leur position d'arrêt, la roue entraînée (6) étant de préférence en prise excentriquement avec une denture interne de l'élément à régler avec un rapport de transmission plus élevé, et la roue d'entraînement et la roue entraînée étant montées ou fixées sur un moyeu commun (1 ou 27), caractérisé en ce que les corps de serrage (10, 11) de la roue libre glissent sur le moyeu (1) fixé au châssis, et en ce que des surfaces obliques (17, 18) destinées au serrage des corps de serrage (10, 11) de la roue libre sont constituées sur la surface interne d'un anneau (15) entourant le moyeu (1 ou 28), anneau qui est relié fermement à la roue entraînée environnante (6) et est muni de saillies (20) qui pénètrent dans des évidements (19) des mors (13) de la roue d'entraînement (2) pour dégager les corps de serrage (10, 11) de leur position de serrage.

2. Mécanisme selon la revendication 1, caractérisé en ce que le moyeu (1) fixé au châssis est constitué sous forme d'une douille (28).

3. Mécanisme selon la revendication 1 ou 2, caractérisé en ce que l'anneau (13) qui entoure le moyeu (1 ou 28) est constitué par le bord (21) d'un élément en forme de pot, dont le fond (22) est percé en son centre pour le passage du moyeu (1) ou d'un axe guidé dans ce dernier, auquel est relié fermement le fond (22) éventuellement au moyen d'une bride (23) formée sur lui, la roue entraînée (6) pouvant être montée sur la bride (23) ou sur le bord (21) du pot.

4. Mécanisme selon l'une quelconque des revendications précédentes, caractérisé en ce que les éléments à ressort élastiques (12) sont maintenus sur la roue d'entraînement (2) par des saillies pénétrant de préférence en leur centre.

5. Mécanisme selon l'une quelconque des revendications précédentes, caractérisé en ce que les éléments à ressort élastiques (12) sont formés sur la roue d'entraînement (2).

6. Mécanisme selon l'une quelconque des revendications précédentes, caractérisé en ce que la roue d'entraînement (2) et/ou la roue entraînée (6) sont réalisées en matière synthétique.
